# EUROPEAN PATENT APPLICATION

(11) **EP 3 816 893 A1**
(43) Date of publication of application: **05.05.2021**
(21) Application number: 19206917.7
(22) Date of filing: 04.11.2019
(51) Int. Cl.: G06Q 10/08

(54) **METHOD FOR INVENTORY MANAGEMENT AND COMPUTER SOFTWARE**

(71) Applicant: Greener Scandinavia AB, 164 55 Kista (SE)
(72) Inventor: STOURIS, Konstantinos, 164 55 Kista (SE); EZEOGO, Victor, 164 55 Kista (SE)
(74) Representative: Tribalyte Ideas

(57) **Abstract**

The invention is related to a method for inventory management comprising the steps of providing a picture of a portion of a stored item (8) by means of a mobile device, analysing the picture by means of a software comprised in the mobile device, sending the first information to a database contained in a remote server (7), receiving further information about the stored item (8), verifying the first information and the further information to create or edit an entry in an item list, update a copy of the item list in an external server (7) and providing different users (1, 2, 3, 4, 5, 6), each one with a further mobile device with the software installed, access to the external server (7) to incorporate, modify and extract information to and from the item list stored in the external server, wherein the users comprise at least one of an item provider, an item user, a repair centre and a disposal service. A computer software for performing these steps is also provided.

## Description

### TECHNICAL FIELD

This invention belongs to the field of inventory management, for those companies with an amount of assets which are in use and stored, connecting the stake holders in a circular economy process.

### STATE OF THE ART

Almost every company has to deal with inventory management. For some of them, it is difficult to keep a track of their assets, to know what items they have, how many of them are not working and what should be done with them.

The present invention tries to overcome these difficulties by a new method for inventory management.

### SUMMARY OF THE INVENTION

The invention provides an alternative solution for this problem by a method for inventory management according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

A first inventive aspect of the invention provides a method for inventory management comprising at least the steps of
providing a picture of a portion of a stored item by means of a mobile device;
analysing the picture by means of a software comprised in the mobile device to obtain a first information about the stored item by means of a software comprised in the mobile device;
sending the first information to a database contained in a remote server, to request further information about the stored item;
receiving further information about the stored item;
verifying the first information and the further information to create or edit an entry in an item list and store the item list in the software of the mobile device;
update a copy of the item list in an external server;
providing different users, each one with a further mobile device with the software installed, access to the external server to incorporate, modify and extract information to and from the item list stored in the external server, wherein the users comprise at least one of an item provider, an item user, a repair centre and a disposal service.

This method may be carried out by different users: one user with a mobile device with the software installed may take a photograph or scan an image of the stored items, while the software converts these pictures in a list of items, by extracting the numerical information from these pictures.

Then, the list, after being enriched with the further information obtained in a database, is a digital list, and, as such, may be shared between the different parties of the lifecycle of this product. For example, the item manufacturer has a list of items, and may share it to a local shop, or to a technical service centre. Alternatively, the manager of an IT department of a big company has to deliver one company laptop for each employee and may associate an entry of the list to the particular product and user of this laptop.

The term "provider" refers to these stake holders in a wide sense, including distributors and leasing companies. The "user" of the method is any stake holder which is involved in inventory management.

The concept of "stored item" can be referred to items which are part of an inventory, so they may be physically stored, transferred or received by the manufacturer.

In some particular embodiments, the provision of a picture is made by an image acquired by the mobile device of a first user.

There is no need of a further device to scan the barcode of a product. Any mobile phone, with the software installed in it, is able to incorporate a product to the list by merely acquiring an image (taking a picture, scanning an image) with the phone camera.

In some particular embodiments, the provision of a picture is made by a further user who sends the picture to a first user.

In some embodiments, the step of obtaining a first information is made by optical character recognition.

This embodiment is very useful when products are identified by their serial numbers, which may be located in their boxes, the casing or the body itself.

In some particular embodiments, the further information comprises at least one of stored item features, the owner of the stored item in a leasing system, tracking information about the status of the stored item, history of the stored item or end of life information of the stored item.

This information is useful for different users, who may take further actions depending on the status of the product.

In some particular embodiments, the external server receives and sends the modifications in the item list to all the users connected to the item list, so that they may modify the list in real time.

This allows all the users connected to the same item list have the list updated.

In some particular embodiments, the users comprise at least one of a scan user, who provides the pictures in the first stage.

The scan user may be an independent user, only hired to scan the items in the physical store. The rest of the users will benefit from this action.

In some particular embodiments, the method further comprises the step of calculating further data by means of the software and incorporating the further data to the corresponding entry of the item list.

These further data may comprise, for example, the carbon footprint, the total cost of the item or the disposal return.

In some particular embodiments, the method further comprises the step of providing further images of the plurality of stored items some time later, to verify the relation between the item list and the stored items in a further stage of their lifecycle.

The list may be updated by any user connected to the list, by submitting new images which are converted into entries.

In some particular embodiments, the method further comprises the step of uploading an existing list to the software.

In some particular embodiments,
at least one of the stored items undergo at least one of the stages of manufacturing, sending, use, repairing, and disposal;
the users are provided with tracking information about the status of the stored item; and
the users are provided with the ability of exchanging information about the stored item.

All the stakeholders are able to follow the tracking information about the stored product during its lifecycle.

In a further inventive aspect, the invention provides a computer software adapted to perform the steps of a method according to any of the preceding claims.

### BRIEF LIST OF DRAWINGS AND REFERENCE NUMBERS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a general system of elements which take part in a method according to the invention.
Figure 2 shows some steps of a method according to the invention.
Figure 3 shows some steps of a method according to the invention.

Elements of the example embodiments are consistently denoted by the same reference numerals throughout the drawings and detailed description where appropriate:
- 1: Manufacturer
- 2: Local vendor
- 3: Buyer
- 4: Technical service centre
- 5: Recycling company
- 6: Freelance assistant
- 7: Server
- 8: Stored items
- 9: Item list
- 10: Mobile device

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

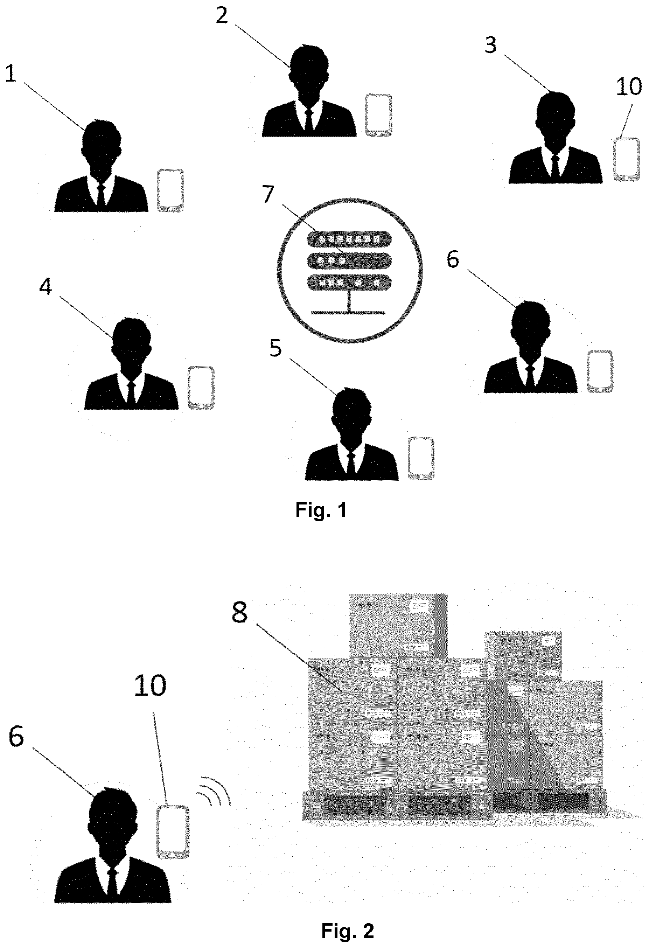

Figure 1 shows a general system of elements which take part in a method according to the invention.

There is a manufacturer 1, a local vendor 2, a buyer 3, a technical service centre 4, a recycling company 5 and a freelance assistant 6. Each one of these users have a mobile phone 10 with a software installed in it, wherein the software is connected to a server 7 and configured to carry out the steps of a method according to the invention.

In Figure 2, according to this method, the freelance assistant 6 takes a picture of their stored items 8 by means of a mobile device 10. The picture is analysed by the software comprised in the mobile device 10 to obtain the serial number of the stored items, by means of optical character recognition.

This serial number is sent to a database contained in the remote server shown in the previous figure, to request further information about the stored item, such as the technical specifications of the product corresponding to this serial number.

The technical specifications are received from the database and associated to the product of the serial number. This information constitutes an entry of an item list. The software verifies if this product with this serial number and these technical specifications is part of the list, or should be incorporated to the list. If the product does not exist in the list, a new entry is created in the list.

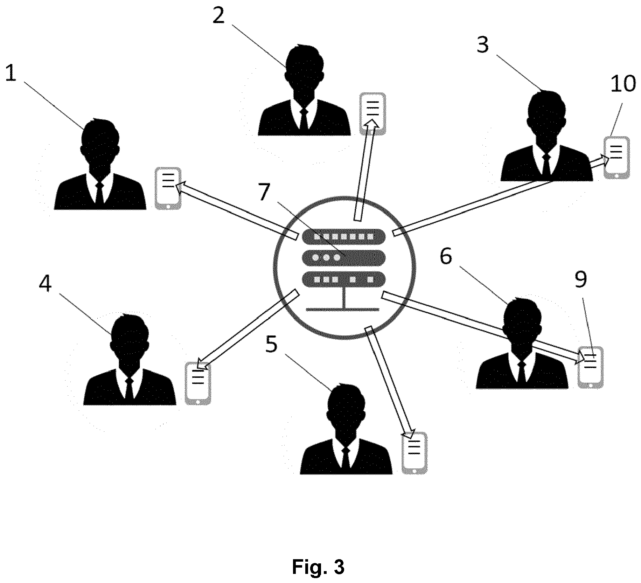

The list is therefore updated in the server. Then, according to Figure 3, the item list 9 is updated in all the mobile devices 10 which have a software connected to the same item list 9. An access to the item list may be sent from one mobile device 10 to other ones, so that new users may have access to the item list 9. In the event any of the users modify the item list 9, the changes are updated in the external server and then the updates are sent to all the mobile devices connected to this list.

Similar steps are taken to update a list which already exists. In this case, the first information of the stored items are also obtained by optical character recognition, and the data of the product is verified against the current version of the list, informing of the products which are going to be added or deleted from the list, according to the new status of the stored items.

Further information, such as the carbon footprint, may be calculated by the software and added to the corresponding entry in the list. This further information may be useful for some users of the software, who may be interested in this auxiliary information to provide services to the manufacturer.

For example, a laptop's life has three main stages: production and distribution, use and disposal. Each stage may have some stakeholder (the manufacturer, the user, the leasing company, the technical service, the disposal company...), and all of them need to be connected to optimize the communication of the chain in the life-cycle of the laptop.

A user in a small company can always monitor to which user is an item assigned, technical specifications, add pictures, status etc. When there is a problem with this item or something breaks, he can contact repair centre (or his distributor if asset is under warranty) on a list or specific, unique asset level. The repair centre gets a notification on a unique asset level and already knows exactly what the customer needs. Later, when an asset reaches its end of life and it is time to dispose, with just one simple operation, the user may locate nearby recycling centre or ITADs (refurbishers), send them a list of items to be disposed and chat on this list, get a quote, agree on price etc.

This user may modify and update the list against the real physical stock in their store. The software is configured to verify that the items on a list sent by the app and the actual assets are the same. Further, the disposal centre may have their own list, with the equipment that have been received for disposal. Just by scanning the received product, the list may be confirmed.

Any new stakeholder may be joint to the list and take part in the life cycle of the product, becoming a scanner or a refurbisher, for example, and connect to the rest of the users associated to each product.

## Claims

1. Method for inventory management comprising at least the steps of
providing a picture of a portion of a stored item (8) by means of a mobile device (10);
analysing the picture by means of a software comprised in the mobile device (10) to obtain a first information about the stored item (8) by means of a software comprised in the mobile device (10);
sending the first information to a database contained in a remote server (7), to request further information about the stored item (8);
receiving further information about the stored item (8);
verifying the first information and the further information to create or edit an entry in an item list (9) and store the item list (9) in the software of the mobile device (10);
update a copy of the item list in an external server (7);
providing different users (1, 2, 3, 4, 5, 6), each one with a further mobile device (10) with the software installed, access to the external server (7) to incorporate, modify and extract information to and from the item list (9) stored in the external server, wherein the users (1, 2, 3, 4, 5, 6) comprise at least one of an item provider, an item user, a repair centre and a disposal service.

2. Method according to claim 1, wherein the provision of a picture is made by an image acquired by the mobile device (10) of a first user.

3. Method according to claim 1, wherein the provision of a picture is made by a further user (6) who sends the picture to a first user.

4. Method according to any of the preceding claims, wherein the step of obtaining a first information is made by optical character recognition.

5. Method according to any of the preceding claims, wherein the further information comprises at least one of stored item features, the owner of the stored item in a leasing system, tracking information about the status of the stored item, history of the stored item or end of life information of the stored item.

6. Method according to any of the preceding claims, wherein the external server receives and sends the modifications in the item list (9) to all the users connected to the item list (9), so that they may modify the item list in real time.

7. Method according to any of the preceding claims, wherein the users comprise at least one of a scan user (6), who provides the pictures in the first stage.

8. Method according to any of the preceding claims, further comprising the step of calculating further data by means of the software, and incorporating the further data to the corresponding entry of the item list (9).

9. Method according to any of the preceding claims, further comprising the step of providing further images of the plurality of stored items some time later, to verify the relation between the item list and the stored items in a further stage of their lifecycle.

10. Method according to any of the preceding claims, further comprising the step of uploading an existing list to the software.

11. Method according to any of the preceding claims, wherein
at least one of the stored items undergo at least one of the stages of manufacturing, sending, use, repairing, and disposal;
the users are provided with tracking information about the status of the stored item; and
the users are provided with the ability of exchanging information about the stored item.

12. Computer software adapted to perform the steps of a method according to any of the preceding claims.
